# EUROPÄISCHE PATENTSCHRIFT

(11) **EP 2 144 721 B1**
(45) Veröffentlichungstag und Bekanntmachung des Hinweises auf die Patenterteilung: **14.07.2010**
(21) Anmeldenummer: 08715457.1
(22) Anmeldetag: 08.02.2008
(51) Int. Cl.: B21F 45/24, F16B 15/00, F16B 15/08, B21D 53/36

(54) **VERFAHREN ZUR HERSTELLUNG EINES VON AUS EINER VIELZAHL VON PARALLEL ZU EINANDER ANGEORDNETEN DRAHTADERN BESTEHENDEN DRAHTBANDES SOWIE NACH DIESEM VERFAHREN HERGESTELLTES DRAHTBAND**
METHOD FOR THE PRODUCTION OF A WIRE STRIP COMPRISING A PLURALITY OF WIRES ARRANGED PARALLEL TO EACH OTHER AND WIRE STRIP PRODUCED ACCORDING TO SAID METHOD
PROCÉDÉ DE RÉALISATION D'UNE BANDE DE FILONS SE COMPOSANT D'UNE PLURALITÉ DE FILONS PARALLÈLES ENTRE EUX, ET BANDE DE FILONS RÉALISÉE SELON CE PROCÉDÉ

(30) Priorität: 04.05.2007 DE 102007020992
(43) Veröffentlichungstag der Anmeldung: 20.01.2010
(73) Patentinhaber: Stahl, Karl-Hermann, Pfälzer Strasse 14 89269 Vöhringen (DE)
(72) Erfinder: Stahl, Karl-Hermann, Pfälzer Strasse 14 89269 Vöhringen (DE)
(74) Vertreter: Dziewior, Joachim
(86) Internationale Anmeldenummer: PCT/DE2008/000224
(87) Internationale Veröffentlichungsnummer: WO 2008/135002

(56) Entgegenhaltungen:
- DE-A1- 1 930 914
- GB-A- 664 170
- US-A- 3 170 279
- US-A- 4 066 165

## Beschreibung

Die Erfindung betrifft ein Verfahren zur Herstellung eines von aus einer Vielzahl von parallel zueinander angeordneten Drahtadern bestehenden Drahtbandes, wobei ein Blechband zur Ausbildung der Drahtadern zunächst entweder einseitig oder beidseitig vorgekerbt wird, wodurch Drahtadern entstehen, die noch mit Stegen verbunden sind. Weiter betrifft die Erfindung ein nach diesem Verfahren hergestelltes Drahtband aus Metall.

Zur Herstellung derartiger Drahtbänder, wie sie zum Beispiel für die Heftklammerproduktion benötigt werden, sind aus dem Stand der Technik unterschiedliche Verfahren bekannt. So beschreibt zum Beispiel die DE-PS 287820 ein Verfahren, bei welchem vorgefertigte Drähte zusammengeklebt oder punktweise zusammengelötet bzw. geschweißt werden, so dass Bänder aus Metall entstehen, die aus der gewünschten Anzahl von Drähten bestehen, die dann anschließend wieder voneinander getrennt werden können.

Aus der DE-PS 540837 ist es bekannt, Metallbänder durch einen Stanzprozess so zu bearbeiten, dass durch das spätere Durchtrennen verbliebener Stege dem Metallband einzelne Teile entnommen werden können.

Der Erfindung liegt die Aufgabe zugrunde, ein Herstellungsverfahren anzugeben, das es ermöglicht, Drahtbänder der eingangs genannten Art herzustellen, für die einerseits keine zusätzlichen Verbindungstechniken benötigt werden, die aber gleichwohl nach ihrer späteren Trennung den jeweiligen Erfordernissen des Endprodukts entsprechend möglichst gratfreie Adern aufweisen.

Diese Aufgabe wird nach der Erfindung dadurch gelöst, dass zur anschließenden Umbildung der Stege zu dünnen, leicht voneinander trennbaren und beim Abtrennen glatte und gratarme Trennflächen bildenden Trennstegen das Drahtband einem Walkprozess unterworfen wird, bei welchem jeder Steg einer mehrfachen Biegeverformung um seine Längsachse derart unterworfen wird, dass sich im Bereich der Stege Anrisse durch Dauerbruch ausbilden und somit der Trennsteg entsteht.

Der durch die Erfindung erreichte Vorteil besteht im Wesentlichen darin, dass unter Ausnutzung des metallurgischen Effektes des Dauerbruches Trennflächen gebildet werden, die weitgehend glatt und gratarm sind, ohne dass hierbei bereits eine vollständige Abtrennung der sich hierdurch ausbildenden Drahtadern erfolgt. Im Ergebnis kann diese Abtrennung später - beispielsweise in einem Heftapparat oder vor einer Weiterverarbeitung, die eine vollständige Trennung der Drahtadern voneinander erforderlich macht - ohne großen Kraftaufwand erfolgen, wobei dann die angestrebten gratarmen und glatten Trennflächen sichtbar werden. Dieses Verfahren hat insbesondere den Vorteil, dass Nachbearbeitungen der Trennflächen, wie sie bei anderen Herstellungsverfahren - etwa Scheren oder Stanzen - üblich sind, hier nicht erforderlich sind.

Die Mindesttiefe der Kerben ist so zu wählen, dass am Kerbgrund durch den Walkprozess zuverlässig Dauerbruchanrisse ausgelöst werden.

Üblicherweise wird es zweckmäßig sein, die maximale Tiefe der V-förmigen Kerben so zu wählen, dass im Bereich der Stege das Umformvermögen der Werkstoffe nahezu erschöpft ist. Die nach der Kerbung verbleibende Dicke des Steges kann im besonderen im Bereich zwischen 20% und 95% der Dicke des Bandes betragen, wobei die Dicke der Stege im wesentlichen durch die Duktilität des Materials mitbestimmt ist.

Weiter hat es sich im Rahmen der Erfindung als vorteilhaft erwiesen, wenn der Walkprozess eine bezüglich der Ebene des Drahtbandes einseitige, mehrfache Biegeverformung bis zum Dauerbruch im Bereich der Stege umfasst. Alternativ kann der Walkprozess auch eine bezüglich der Ebene des Drahtbandes beidseitige, mehrfache Biegeverformung bis zum Dauerbruch im Bereich der Stege umfassen.

Der Walkprozess kann dabei derart ablaufen, dass die mehrfache Biegeverformung der Stege um jeweils gleiche Winkelbeträge erfolgt. Je nach Anwendungsfall und Materialbeschaffenheit kann es stattdessen jedoch auch vorteilhafter sein, wenn die mehrfache Biegeverformung der Stege um jeweils zunehmende oder auch abnehmende Winkelbeträge erfolgt.

Die mehrfache Biegeverformung der Stege sollte zweckmäßigerweise unter einem Winkel kleiner als der Kerbwinkel erfolgen.

Um die Drahtadern vollständig oder nur örtlich von einander zu trennen, kann der Trennsteg durch geringes, gegeneinander gerichtetes Auslenken von nebeneinander liegenden Drahtadern quer zum Band gebrochen werden. Dabei sollte berücksichtigt werden, dass die verbleibenden Stegbereiche und die erzeugten Durchbruchzonen den Erfordernissen des Zwischenproduktes bzw. den Verarbeitungsmöglichkeiten des Endproduktes entsprechen. Dazu können Markierungen auf dem Drahtband angebracht werden, die der Gesamtlänge des Endproduktes entsprechen und die bei der Verarbeitung des Drahtbandes abgefragt werden können. Es besteht jedoch auch die Möglichkeit, im Anschluss an den Walkprozess zunächst keine Durchbruchzonen zu erzeugen, sondern die Gestaltung der Reststege und der Durchbruchzone entsprechend den Erfordernissen des jeweiligen Produktes mit einer geeigneten Vorrichtung erst direkt vor der Weiterverarbeitungsanlage vorzunehmen.

Schließlich empfiehlt es sich bei Anwendung des Verfahrens, dass als Vormaterial bandförmiges Halbzeug aus Metall eingesetzt wird.

In vorrichtungsmäßiger Hinsicht wird bei einem aus mehreren parallel zueinander angeordneten, über Stege miteinander verbundenen Drahtadern bestehenden Drahtband aus Metall die der Erfindung zugrunde liegende Aufgabe gelöst durch ein bandförmiges, als Vormaterial eingesetztes Halbzeug, das zur Ausbildung der Drahtadern einseitig oder beidseitig vorgekerbt ist, wobei die Stege durch mehrfache Biegeverformung mittels eines Walkprozesses zu dünnen, leicht voneinander trennbaren und beim Abtrennen glatte und gratarme Trennflächen bildenden, einen Dauerbruch aufweisenden Trennstegen umgeformt sind.

Durch den Walkprozess werden auf den Steggründen Dauerbruchanrisse erzeugt, wodurch die Stege geschwächt werden. Die durch Dauerbruch erzeugten Trennflächen sind relativ glatt und gratarm. Die verbleibenden Trennstege lassen sich sehr dünn gestalten, weil sie im Bereich der neutralen Phase des Biegevorgangs liegen; die Drahtadern lassen sich daher leicht voneinander trennen.

Ein derartiges Drahtband besitzt den Vorteil, beim Abtrennen einzelner Drahtadern durch den bestehenden Dauerbruch glatte und gratarme Trennflächen zu bilden, wobei zugleich die zur Abtrennung benötigten Kräfte in von der jeweiligen Anwendung geforderten, vernünftigen Grenzen bleiben.

Als metallisches Material empfehlen sich im Rahmen der Erfindung Werkstoffe auf Edelstahlbasis, Eisenbasis, Kupferbasis oder Aluminiumbasis. Weiter können als metallisches Material auch beschichtete Metallbänder, insbesondere verzinktes oder verkupfertes Eisenband vorgesehen sein. Als metallisches Material können im besonderen auch Werkstoffe vorgesehen sein, mit denen für die jeweilige Werkstoffgruppe besonders hohe Festigkeitswerte durch Walzen erzielt werden.

Die Öffnungswinkel der Kerben im Drahtband liegen zweckmäßigerweise zwischen 30° und 120°.

Die Dicke der Stege liegt zweckmäßigerweise im Bereich zwischen 20 % und 95 % der Dicke des Bandes und wird von den Eigenschaften des metallischen Materials, insbesondere dessen Duktilität bestimmt.

Im Rahmen der Erfindung ist weiter vorgesehen, dass die Stege durch den Walkprozess quer zum vorgekerbten Band auf dem hoch verfestigten Kerbgrund im Oberflächenbereich Rissbildungen durch Dauerbruch aufweisen, der eine samtartige Oberfläche hat und außerdem eine Gratbildung beim späteren Trennvorgang reduziert. Um die Trennkraft klein zu halten, kann es weiter auch von Vorteil sein, wenn die Trennstege in Längsrichtung zusätzlich örtlich auftretende Durchbrüche aufweisen.

Ferner hat es sich im Rahmen der Erfindung als vorteilhaft erwiesen, wenn bei beschichteten Metallbändern Ober- und Unterseite der Drahtadern mit einer relativ gleichmäßigen Schichtdicke belegt sind, die Schmalseiten der Drahtadern im Bereich der Kerbflanke durch die Kerbung zur Bruchzone hin dagegen eine abnehmende Schichtdicke aufweisen und die Bruchzonen selbst nicht beschichtet sind.

Üblicherweise werden die Adern im Drahtband untereinander gleiche Breite aufweisen; im Rahmen der Erfindung besteht jedoch ebenso auch die Möglichkeit, dass die Adern im Drahtband eine unterschiedliche Breite aufweisen.

Schließlich besteht im Rahmen der Erfindung auch die Möglichkeit, dass die durch das Vormaterial zunächst vorgegebene, im Wesentlichen rechteckige Gestalt der. Drahtadern außerhalb des Kerbbereichs dem Einsatzzweck entsprechend umgeformt ist.

Im Folgenden wird die Erfindung an einem in der Zeichnung dargestellten Ausführungsbeispiel näher erläutert; es zeigen:
- Fig. 1: ein nur teilweise wiedergegebenes, zur Herstellung des Drahtbandes vorgesehenes Vormaterial im Querschnitt mit bereits vorgenommener Vorkerbung,
- Fig. 2: das dem Walkprozess unterworfene, zur Herstellung des Drahtbandes vorgesehene Vormaterial im Zustand einer Biegeverformung,
- Fig. 3: eine Anordnung zur teilweisen Durchtrennung der Trennstege des Drahtbandes,
- Fig. 4: eine Seitenansicht des Gegenstandes nach Figur 3,
- Fig. 5: einen Schnitt durch das Drahtband im Bereich einer Kerbe in nur teilweiser Darstellung,
- Fig. 6: Schnitte durch das Drahtband im Bereich einer Kerbe bei einem zur Anwendung als Heftklammer U-förmig abgewinkelten Drahtband für unterschiedliche Ausgestaltungsbeispiele,
- Fig. 7: einen Querschnitt durch eine einzelne beschichtete Drahtader.

Die in der Zeichnung dargestellte Anordnung dient der Herstellung eines von aus einer Vielzahl von parallel zu einander angeordneten Drahtadern 2 bestehenden Drahtbandes 1.

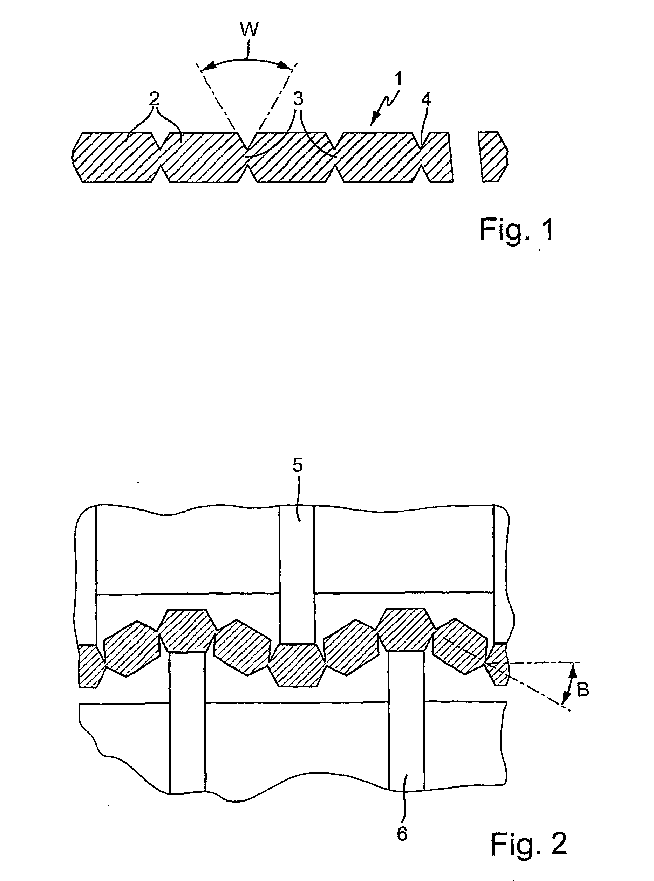

Hierbei wird zunächst ein Blechband zur Ausbildung der Drahtadern 2 in in der Zeichnung nicht näher dargestellter Weise entweder einseitig oder beidseitig vorgekerbt, wodurch Drahtadern 2 entstehen, die - wie in Figur 1 dargestellt - noch mit Stegen 3 verbunden sind.

Zur anschließenden Umbildung der Stege 3 zu dünnen, leicht voneinander trennbaren und beim Abtrennen glatte und gratarme Trennflächen bildenden Trennstegen wird das Drahtband gemäß Figur 2 einem Walkprozess unterworfen, bei welchem jeder Steg einer mehrfachen Biegeverformung mittels Oberwalzen 5 und Unterwalzen 6 um seine Längsachse unterworfen wird. Dadurch bilden sich im Bereich der Stege 3 Anrisse durch Dauerbruch aus, wodurch ein - später leicht trennbarer - Trennsteg entsteht.

Die Einkerbung wird - wie aus der Zeichnung zu ersehen, bevorzugt als v-förmige Kerbung 4 vorgenommen, wobei der Kerbwinkel W zwischen 30° und 120° betragen kann. Bevorzugt ist hierbei, wie sich ebenfalls aus der Zeichnung ergibt, ein Kerbwinkel W von etwa 60°.

Die Dicke des Steges 3 kann hierbei im Bereich von etwa 20 % bis 95 % der Dicke des Bandes 1 betragen, wobei dies insbesondere von der Duktilität des Materials abhängig ist. In der Regel wird die Kerbtiefe so gewählt sein, dass im Bereich der Stege 3 das Umformvermögen des Werkstoffes nahezu erschöpft ist.

Der Walkprozess umfasst eine bezüglich der Ebene des Drahtbandes 1 entweder einseitige oder auch beidseitige, mehrfache Biegeverformung, wie dies in der Figur 2 angedeutet ist. Hierzu sind bedarfsweise mehrere jeweils aus einer Oberwalze 5 und einer Unterwalze 6 bestehende Walzanordnungen in Laufrichtung des Drahtbandes 1 hintereinander angeordnet.

Die mehrfache Biegeverformung der Stege 3 um einen Biegewinkel B kann hierbei entweder jeweils um gleiche Winkelbeträge erfolgen; ebenso besteht jedoch auch die Möglichkeit, dass die mehrfache Biegeverformung der Stege 3 um jeweils zunehmende oder abnehmende Winkelbeträge erfolgt. Auch diese Auswahl ist entsprechend der Eigenschaften des verwendeten Bandmaterials zu treffen. Üblicherweise wird hierbei die mehrfache Biegeverformung der Stege 3 unter einem Winkel erfolgen, der kleiner als der Kerbwinkel W ist. Als Vormaterial wird hierbei bandförmiges Halbzeug aus Metall eingesetzt, wofür sich insbesondere metallisches Material auf Edelstahlbasis, Eisenbasis, Kupferbasis oder Aluminiumbasis anbietet. Möglich ist hierbei insbesondere auch der Einsatz von beschichteten Metallbändern, insbesondere von verzinktem oder verkupfertem Eisenband. Dabei hat es sich insbesondere auch als vorteilhaft erwiesen, wenn als metallisches Material Werkstoffe vorgesehen sind, mit denen für die jeweilige Werkstoffgruppe besonders hohe Festigkeitswerte durch Walzen erzielt werden.

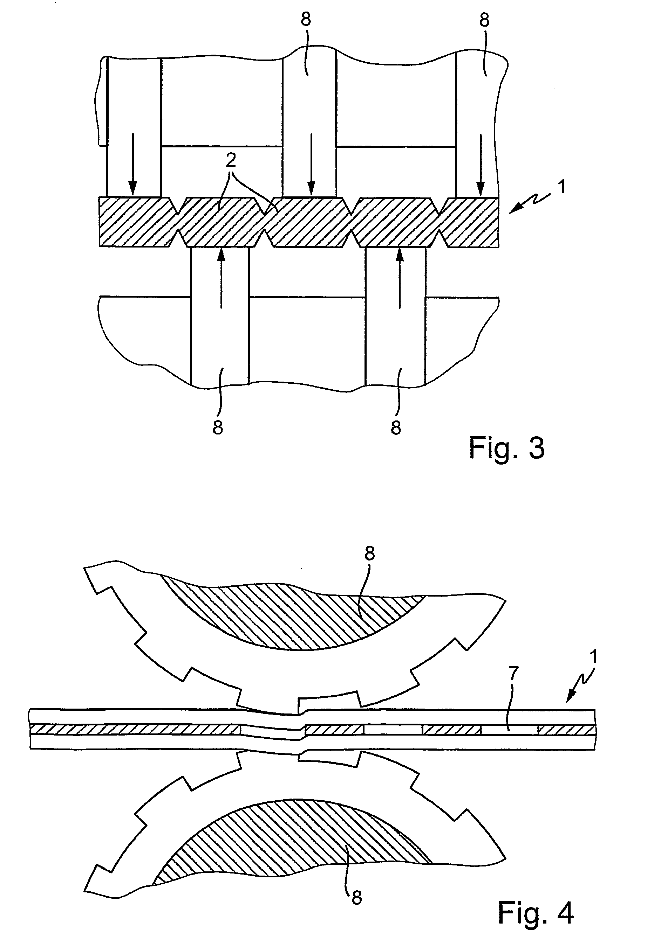

Im Hinblick auf die spätere Abtrennbarkeit der einzelnen Drahtadern 2 könnten die Trennstege 3 in Längsrichtung bereits örtlich auftretende Durchbrüche 7 aufweisen. Um dies zu erzeugen, kann eine Walzeinrichtung gemäß Figur 3 und 4 vorgesehen sein, bei welcher durch nur geringfügiges, gegengerichtetes Auslenken von nebeneinander liegenden Adern 2 ein Bruch des Trennsteges erreicht wird. Durch eine geeignete Gestaltung dieser Trennwalzen 8 gemäß Figur 3 und 4 kann die Lage der Trennzonen und Trennstegreste 9 den jeweiligen Erfordernissen, wie sie beispielsweise bei einem Heftklammernstab bestehen, angepasst werden. Dies ergibt sich im Einzelnen aus der Figur 4.

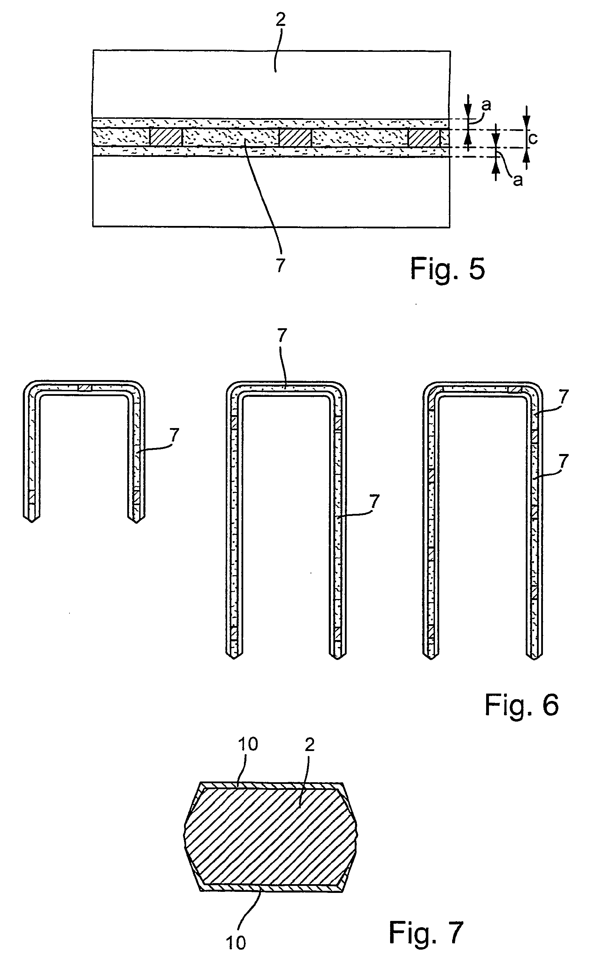

In Figur 5 ist ein mögliches Ergebnis der Behandlung eines Steges 3 nach durchgeführtem Walkprozess und nach den eben beschriebenen örtlichen Trennvorgängen dargestellt. Der Bereich a bezeichnet dabei zwei Teilbruchzonen, die durch den Walkprozess erzeugt wurden. Der Bereich c zeigt dagegen einerseits Bereiche, in denen der Reststeg bereits örtlich durchtrennt wurde sowie - schraffiert wiedergegeben - die verbliebenen Trennstegreste 9.

Hierfür zeigt die Figur 6 Beispiele bei Heftklammerstäben, wo sich die Ausbildung örtlich durchtrennter Reststege und verbleibender Reststege empfehlen kann.

Bei beschichteten Metallbändern kann die Ober- und Unterseite der Drahtadern 2 mit einer relativ gleichmäßigen Schichtdicke 10 belegt sein, wohingegen die Schmalseiten der Drahtadern 2 im Bereich der Kerbung 4 zur Bruchzone hin eine abnehmende Schichtdicke aufweisen, während die Bruchzone selbst nicht beschichtet ist. Dies ist am Beispiel einer einzelnen Drahtader in Figur 7 wiedergegeben.

Im Übrigen kann in in der Zeichnung ebenfalls nicht dargestellter Weise die Anordnung auch so gewählt sein, dass die Adern 2 im Drahtband 1 unterschiedliche Breite aufweisen. Im Allgemeinen wird die Adernbreite dagegen im Drahtband 1 einheitlich sein.

Schließlich besteht die ebenfalls in der Zeichnung nicht näher dargestellte Möglichkeit, dass die durch das Vormaterial zunächst vorgegebene, im Wesentlichen rechteckige Gestalt der Drahtadern 2 außerhalb des Kerbbereiches dem Einsatzzweck entsprechend umgeformt wird.

## Patentansprüche

1. Verfahren zur Herstellung eines von aus einer Vielzahl von parallel zueinander angeordneten Drahtadern (2) bestehenden Drahtbandes (1), wobei ein Blechband zur Ausbildung der Drahtadern (2) zunächst entweder einseitig oder beidseitig vorgekerbt wird, wodurch Drahtadern (2) entstehen, die noch mit Stegen (3) verbunden sind, **dadurch gekennzeichnet, daß** zur anschließenden Umbildung der Stege (3) zu dünnen, leicht voneinander trennbaren und beim Abtrennen glatte und gratarme Trennflächen bildenden Trennstegen das Drahtband (1) einem Walkprozess unterworfen wird, bei welchem jeder Steg (3) einer mehrfachen Biegeverformung um seine Längsachse derart unterworfen wird, daß sich im Bereich der Stege (3) Anrisse durch Dauerbruch ausbilden und somit der Trennsteg entsteht.

2. Verfahren nach Anspruch 1, **dadurch gekennzeichnet, daß** die Vorkerbung durch eine V-förmige Kerbung (4) erfolgt.

3. Verfahren nach Anspruch 2, **dadurch gekennzeichnet, daß** der Kerbwinkel W zwischen 30° und 120° beträgt.

4. Verfahren nach Anspruch 2, **dadurch gekennzeichnet, daß** der Kerbwinkel W etwa 60° beträgt.

5. Verfahren nach einem der Ansprüche 1 bis 4, **dadurch gekennzeichnet, daß** die Dicke des Steges (3) 20 % bis 95 % der Dicke des Bandes (1) beträgt.

6. Verfahren nach einem der Ansprüche 1 bis 4, **dadurch gekennzeichnet, daß** die Tiefe der V-förmigen Kerben (4) so gewählt wird, daß im Bereich der Stege (3) das Umformvermögen des Werkstoffes nahezu erschöpft ist.

7. Verfahren nach einem der Ansprüche 1 bis 6, **dadurch gekennzeichnet, daß** der Walkprozess eine bezüglich der Ebene des Drahtbandes (1) einseitige, mehrfache Biegeverformung bis zum Dauerbruch im Bereich der Stege (3) umfaßt.

8. Verfahren nach einem der Ansprüche 1 bis 6, **dadurch gekennzeichnet, daß** der Walkprozess eine bezüglich der Ebene des Drahtbandes (1) beidseitige, mehrfache Biegeverformung bis zum Dauerbruch im Bereich der Stege (3) umfaßt.

9. Verfahren nach einem der Ansprüche 1 bis 8, **dadurch gekennzeichnet, daß** die mehrfache Biegeverformung der Stege (3) um jeweils gleiche Winkelbeträge erfolgt.

10. Verfahren nach einem der Ansprüche 1 bis 8, **dadurch gekennzeichnet, daß** die mehrfache Biegeverformung der Stege (3) um jeweils zunehmende oder abnehmende Winkelbeträge erfolgt.

11. Verfahren nach einem der Ansprüche 1 bis 10, **dadurch gekennzeichnet, daß** die mehrfache Biegeverformung der Stege (3) unter einem Winkel kleiner als der Kerbwinkel W erfolgt.

12. Verfahren nach einem der Ansprüche 1 bis 11, **dadurch gekennzeichnet, daß** der Trennsteg (3) örtlich durch geringes, gegeneinander gerichtetes Auslenken von nebeneinander liegenden Drahtadern (2) quer zum Band (1) gebrochen werden.

13. Verfahren nach einem der Ansprüche 1 bis 12, **dadurch gekennzeichnet, daß** als Vormaterial bandförmiges Halbzeug aus Metall eingesetzt wird.

14. Aus mehreren parallel zueinander angeordneten, über Stege (3) miteinander verbundenen Drahtadern (2) bestehendes, nach wenigstens einem der vorstehenden Verfahrensansprüche gefertigtes Drahtband aus Metall, **gekennzeichnet durch** bandförmiges, als Vormaterial eingesetztes Halbzeug, das zur Ausbildung der Drahtadern (2) einseitig oder beidseitig vorgekerbt ist, wobei die Stege (3) **durch** mehrfache Biegeverformungen mittels eines Walkprozesses zu dünnen, leicht voneinander trennbaren und beim Abtrennen glatte und gratarme Trennflächen bildenden, einen Dauerbruch aufweisenden Trennstegen umgeformt sind.

15. Drahtband nach Anspruch 14, **dadurch gekennzeichnet, daß** als metallisches Material Werkstoffe auf Edelstahlbasis, Eisenbasis, Kupferbasis oder Aluminiumbasis vorgesehen sind.

16. Drahtband nach Anspruch 14, **dadurch gekennzeichnet, daß** als metallisches Material beschichtete Metallbänder, insbesondere verzinktes oder verkupfertes Eisenband vorgesehen sind.

17. Drahtband nach Anspruch 14, **dadurch gekennzeichnet, daß** als metallisches Material Werkstoffe vorgesehen sind, mit denen für die jeweilige Werkstoffgruppe besonders hohe Festigkeitswerte durch Walzen erzielt werden.

18. Drahtband nach den Ansprüchen 14 bis 17, **dadurch gekennzeichnet, daß** der Öffnungswinkel der Kerben (4) zwischen 30 Grad und 120 Grad liegt.

19. Drahtband nach den Ansprüchen 14 bis 18, **dadurch gekennzeichnet, daß** die Dicke der Stege (3) 20 % bis 95 % der Dicke des Bandes (1) beträgt.

20. Drahtband nach den Ansprüchen 14 bis 19, **dadurch gekennzeichnet, daß** die Stege (3) durch den Walkprozeß quer zum vorgekerbten Band (1) auf dem hochverfestigten Kerbgrund im Oberflächenbereich Rißbildungen durch Dauerbruch aufweisen, der eine samtartige Oberfläche hat und außerdem eine Gratbildung beim späteren Trennvorgang reduziert.

21. Drahtband nach den Ansprüchen 14 bis 20, **dadurch gekennzeichnet, daß** die Trennstege in Längsrichtung örtlich auftretene Durchbrüche (7) aufweisen.

22. Drahtband nach den Ansprüchen 14 bis 21, **dadurch gekennzeichnet, daß** bei beschichteten Metallbändern Ober- und Unterseite der Drahtadern (2) mit einer relativ gleichmäßigen Schichtdicke (10) belegt sind, die Schmalseiten der Drahtadern (2) im Bereich der Kerbung (4) zur Bruchzone hin dagegen eine abnehmende Schichtdicke aufweisen und die Bruchzonen selbst nicht beschichtet sind.

23. Drahtband nach den Ansprüchen 14 bis 22, **dadurch gekennzeichnet, daß** die Adern (2) im Drahtband (1) unterschiedliche Breite aufweisen.

24. Drahtband nach den Ansprüchen 14 bis 23, **dadurch gekennzeichnet, daß** die durch das Vormaterial zunächst vorgebene, im wesentlichen rechteckige Gestalt der Drahtadern (2) außerhalb des Kerbbereichs dem Einsatzzweck entsprechend umgeformt ist.

## Claims

1. A method of making a strip (1) formed by a plurality of parallel wires (2), wherein a sheet-metal strip is first grooved on one or both sides to form wires (2) interconnected by webs (3), **characterized in that**, for the subsequent conversion of the webs (3) into thin and easily separated webs that when separated form smooth and burr-free edge faces, the strip (1) is subjected to a bending process during which each web (3) is subjected to multiple bends along its longitudinal axis in such a way that incipient cracks form due to fatigue fracture at the webs (3), and thereby a separation web is created.

2. The method according to claim 1, **characterized in that** the groove formation is the formation of V-shaped grooves (4).

3. The method according to claim 2, **characterized in that** a groove angle W is between 30° and 120°.

4. The method according to claim 2, **characterized in that** a groove angle W is about 60°.

5. The method according to one of claims 1 to 4,
**characterized in that** a thickness of the web (3) is 20% to 95% of a thickness of the strip (1).

6. The method according to one of claims 1 to 4,
**characterized in that** a depth of the V-shaped grooves (4) is selected such that the deformation capacity of the material is nearly exhausted at the webs (3).

7. The method according to one of claims 1 to 6,
**characterized in that** the bending process comprises multiple bends up to fatigue fracture on one side with regard to the plane of the strip (1) at the webs (3).

8. The method according to one of claims 1 to 6,
**characterized in that** the bending process comprises multiple bends up to fatigue fracture on one side with regard to a plane of the strip (1) at the webs (3).

9. The method according to one of claims 1 to 8,
**characterized in that** the multiple bends of the webs (3) are carried out at the same angles.

10. The method according to one of claims 1 to 8,
**characterized in that** the multiple bends of the webs (3) are carried out about increasing or decreasing angles.

11. The method according to one of claims 1 to 10,
**characterized in that** the multiple bends of the webs (3) are carried out at an angle that is smaller than the groove angle W.

12. The method according to one of claims 1 to 11,
**characterized in that** the separation web (3) is locally fractured by a slight deflection of adjacent wires (2) relative to each other transversely of the strip (1).

13. The method according to one of claims 1 to 12,
**characterized in that** strip-shaped semifinished products made from metal may also be utilized as the starting material.

14. A metal strip formed by a plurality of wires (2) connected to each other via webs (3) and made according to at least one of the previous process claims, **characterized by** a strip-shaped semifinished product utilized as a starting material and grooved on one or both sides for forming the wires (2), wherein by fatigue fracture from multiple bends the webs (3) are made thin and easily separated and when separated form smooth and burr-free edge faces.

15. The strip according to claim 14, **characterized in that** the metal is basically stainless steel, iron, copper, or aluminum.

16. The strip according to claim 14, **characterized in that** coated metal strips, particularly galvanized or copper-plated iron strips, are used as the metal.

17. The strip according to claim 14, **characterized in that** the metal is a material having high strength created by rolling.

18. The strip according to claims 14 to 17,
**characterized in that** the opening angle of the grooves (4) is between 40° and 120°.

19. The strip according to claims 14 to 18,
**characterized in that** the thickness of the webs (3) is 20% to 95% of the thickness of the strip (1).

20. The strip according to claims 14 to 19,
**characterized in that** the webs (3) have surface cracks due to fatigue fracture on the high-strength groove base from transverse bending of the grooved strip (1), producing a smooth surface and reducing the formation of burrs during a subsequent separation.

21. The strip according to claims 14 to 20,
**characterized in that** the separation webs longitudinally spaced short perforations (7).

22. The strip according to claims 14 to 21,
**characterized in that** in case of coated metal strips upper and lower sides of the wires (2) are coated with a relatively uniform coating thickness (10) while the narrow sides of the wires (2) have a decreasing coating thickness at the grooves (4) toward a fracture zone which itself is not coated.

23. The strip according to claims 14 to 22,
**characterized in that** the wires (2) have different widths in the strip (1).

24. The strip according to claims 14 to 23,
**characterized in that** a substantially rectangular shape of the wires (2) initially predetermined by the starting material is transformed outside of the groove area according to the intended use.

## Revendications

1. Procédé de réalisation d'une bande de fils (1) se composant d'une pluralité de fils (2) parallèles entre eux, dans lequel on entaille d'abord au préalable une bande de tôle, soit sur une face soit sur les deux faces, pour former les fils (2), ce qui crée des fils (2) qui sont encore attachés les uns aux autres par des ponts (3), **caractérisé en ce que**, pour convertir ensuite les ponts (3) en minces nervures de séparation aisément séparables l'une de l'autre et formant des faces de séparation lisses et pratiquement sans bavures lors de la séparation, on soumet la bande de fils (1) à une opération d'assouplissement, dans laquelle chaque pont (3) est soumis à une déformation par flexion multiple autour de son axe longitudinal de telle manière qu'il se forme dans la région des ponts (3) des amorces de fissure dues à la rupture par fatigue et qu'apparaisse ainsi la nervure de séparation.

2. Procédé selon la revendication 1, **caractérisé en ce que** l'on pratique les entailles préalables par un entaillage en forme de V (4).

3. Procédé selon la revendication 2, **caractérisé en ce que** l'angle d'entaille W est compris entre 30° et 120°.

4. Procédé selon la revendication 2, **caractérisé en ce que** l'angle d'entaille W vaut environ 60°.

5. Procédé selon l'une quelconque des revendications 1 à 4, **caractérisé en ce que** l'épaisseur du pont (3) vaut de 20 % à 95 % de l'épaisseur de la bande (1).

6. Procédé selon l'une quelconque des revendications 1 à 4, **caractérisé en ce que** l'on choisit la profondeur des entailles en forme de V (4) de telle manière que la capacité de déformation du matériau soit pratiquement épuisée dans la région des ponts (3).

7. Procédé selon l'une quelconque des revendications 1 à 6, **caractérisé en ce que** l'opération d'assouplissement comprend une déformation par flexion multiple sur un côté par rapport au plan de la bande de fils (1), jusqu'à la rupture par fatigue dans la région des ponts (3).

8. Procédé selon l'une quelconque des revendications 1 à 6, **caractérisé en ce que** l'opération d'assouplissement comprend une déformation par flexion multiple sur les deux côtés par rapport au plan de la bande de fils (1), jusqu'à la rupture par fatigue dans la région des ponts (3).

9. Procédé selon l'une quelconque des revendications 1 à 8, **caractérisé en ce que** la déformation par flexion multiple des ponts (3) est effectuée chaque fois avec des angles de même valeur.

10. Procédé selon l'une quelconque des revendications 1 à 8, **caractérisé en ce que** la déformation par flexion multiple des ponts (3) est effectuée respectivement avec des angles de valeur croissante ou décroissante.

11. Procédé selon l'une quelconque des revendications 1 à 10, **caractérisé en ce que** la déformation par flexion multiple des ponts (3) est effectuée avec un angle plus petit que l'angle d'entaille W.

12. Procédé selon l'une quelconque des revendications 1 à 11, **caractérisé en ce que** la nervure de séparation (3) est rompue localement par une faible inclinaison l'un par rapport à l'autre de fils (2) disposés l'un à côté de l'autre, transversalement à la bande (1).

13. Procédé selon l'une quelconque des revendications 1 à 12, **caractérisé en ce que** l'on utilise comme matériau précurseur un demi-produit en métal en forme de bande.

14. Bande de fils en métal se composant de plusieurs fils (2) attachés l'un à l'autre par des ponts (3) et parallèles entre eux, fabriquée selon au moins une des revendications de procédé qui précèdent, **caractérisée par** un demi-produit en forme de bande, utilisé comme matériau précurseur, qui est préalablement entaillé sur une face ou sur les deux faces pour former les fils (2), dans lequel les ponts (3) sont convertis, par des déformations de flexion multiples au moyen d'une opération d'assouplissement, en minces nervures de séparation aisément séparables l'une de l'autre et formant des faces de séparation lisses et pratiquement sans bavures lors de la séparation, et présentant une rupture de fatigue.

15. Bande de fils selon la revendication 14, **caractérisée en ce qu'**il est prévu comme matériau métallique un matériau à base d'acier allié, à base de fer, à base de cuivre ou à base d'aluminium.

16. Bande de fils selon la revendication 14, **caractérisée en ce qu'**il est prévu comme matériau métallique des bandes de métal revêtues, en particulier une bande de fer revêtue de zinc ou de cuivre.

17. Bande de fils selon la revendication 14, **caractérisée en ce qu'**il est prévu comme matériau métallique des matériaux avec lesquels on obtient par laminage des valeurs de résistance particulièrement élevées pour le groupe de matériaux respectif.

18. Bande de fils selon l'une quelconque des revendications 14 à 17, **caractérisée en ce que** l'angle d'ouverture des entailles (4) est compris entre 30 degrés et 120 degrés.

19. Bande de fils selon l'une quelconque des revendications 14 à 18, **caractérisée en ce que** l'épaisseur des ponts (3) vaut de 20 % à 95 % de l'épaisseur de la bande (1).

20. Bande de fils selon l'une quelconque des revendications 14 à 19, **caractérisée en ce que** les ponts (3) présentent, par l'opération d'assouplissement transversalement à la bande préalablement entaillée (1), dans la zone de surface sur le fond d'entaille fortement écroui, une rupture par fatigue qui a une surface de type velouté et qui réduit par ailleurs la formation de bavure lors de l'opération de séparation ultérieure.

21. Bande de fils selon l'une quelconque des revendications 14 à 20, **caractérisée en ce que** les nervures de séparation présentent des trouées (7) apparaissant localement en direction longitudinale.

22. Bande de fils selon l'une quelconque des revendications 14 à 21, **caractérisée en ce que**, dans le cas de bandes métalliques revêtues, la face supérieure et la face inférieure des fils (2) sont munies d'une épaisseur de couche relativement uniforme (10), les côtés étroits des fils (2) présentent une épaisseur de couche diminuant au contraire dans la région de l'entaille vers la zone de rupture, et les zones de rupture elles-mêmes ne sont pas revêtues.

23. Bande de fils selon l'une quelconque des revendications 14 à 22, **caractérisée en ce que** les fils (2) présentent dans la bande de fils (1) une largeur différente.

24. Bande de fils selon l'une quelconque des revendications 14 à 23, **caractérisée en ce que** la forme essentiellement rectangulaire des fils (2), prédéterminée initialement par le matériau précurseur, est déformée selon l'utilisation visée à l'extérieur de la zone d'entaille.
